(19) **Europäisches Patentamt**

**European Patent Office**

**Office européen des brevets**

(11) Veröffentlichungsnummer: **0 271 783 B1**

(12) # EUROPÄISCHE PATENTSCHRIFT

(45) Veröffentlichungstag der Patentschrift:
05.06.91 Patentblatt 91/23

(21) Anmeldenummer: **87117964.4**

(22) Anmeldetag: **04.12.87**

(30) Priorität: **19.12.86 DE 3643611**

(43) Veröffentlichungstag der Anmeldung:
**22.06.88 Patentblatt 88/25**

(45) Bekanntmachung des Hinweises auf die
Patenterteilung:
**05.06.91 Patentblatt 91/23**

(84) Benannte Vertragsstaaten:
**FR GB IT NL SE**

(56) Entgegenhaltungen:
**EP-A- 0 131 872**
**BE-A- 527 872**
**DE-A- 2 434 450**

(51) Int. Cl.⁵: **F24H 3/06**

(54) **Raumheizgerät für Kleinräume, insbesondere für fahrbare Räume.**

(73) Patentinhaber: **Philipp Kreis GmbH & Co.**
**TRUMA-Gerätebau**
**Wernher-von-Braun-Strasse 12-14**
**W-8011 Putzbrunn (DE)**

(72) Erfinder: **Mossbach, Wilhelm**
**Rotbuchenstrasse 37**
**W-8011 Kirchseeon (DE)**
Erfinder: **Baur, Jörg-Friedrich, Dipl.-Ing.**
**Haferweg 25**
**W-8000 München 81 (DE)**

(74) Vertreter: **Hain, Leonhard, Dipl.-Ing.**
**Tal 18/IV**
**W-8000 München 2 (DE)**

## Beschreibung

Die Erfindung betrifft ein Raumheizgerät für Kleinräume, insbesondere für fahrbare Räume, wie Wohnwagen, Fahrzeug- und Schiffskabinen, gemäß dem Oberbegriff des Patentanspruches 1.

Bei Raumheizgeräten dieser Art ist der Wärmetauscher von einem Außenmantel umgeben, um einen Heizraum für die zu erwärmende Heizluft mit geführter Heizluftströmung zu schaffen. Zur Heizluftführung sieht ein bekanntes Raumheizgerät gemäß der DE-PS 33 25 344 mit einem stehenden, von Verbrennungsgasen durchströmten Wärmetauscher einen Heizraummantel mit einer seitlichen Heizluft-Eintrittsöffnung vor, die mit einer etwa auf Brennerhöhe angeordneten Gebläsekammer in Verbindung steht, in der ein Radialgebläse rotiert und die durch eine sich seitlich an eine Basisplatte des Wärmetauschers anschließende Abschlußplatte nach unten abgeschlossen ist. Unter dieser Abschlußplatte ist eine Verbrennungsluftkammer mit einem zusätzlichen Ventilatorrad ausgebildet. Die beiden Gebläse sind gleichachsig angeordnet und durch einen gemeinsamen Motor angetrieben. Da sowohl für die Heizluft als auch für die Verbrennungsluft eigene Gebläse vorgesehen sind, läßt sich das jeweilige Fördervolumen dem erwünschten Bedarf anpassen.

Die seitliche Anordnung dieser Gebläsekammern am Wärmetauscher ermöglicht eine besonders niedrige Bauhöhe. Allerdings läßt sich diese Anordnung nur an zylindrischen Wärmetauschern ohne Leistungsverlust verwirklichen.

Der Erfindung liegt nunmehr die Aufgabe zugrunde, ein Raumheizgerät für Kleinräume nach der Art des Oberbegriffes des Patentanspruches 1 so zu verbessern, daß auch an einem Wärmetauscher mit länglichem Querschnitt und somit vergrößerter Heizfläche eine die Heizleistung steigernde Luftführung möglich ist.

Diese Aufgabe wird an einem Raumheizgerät nach dem Oberbegriff des Patentanspruches 1 erfindungsgemäß durch die kennzeichnenden Merkmale dieses Patentanspruches gelöst.

Durch die erfindungsgemäße Anordnung und Ausbildung des Gebläsegehäuses wird eine besonders günstige Verteilung der Heizluft über einen im Querschnitt länglichen Wärmetauscher erreicht. Dadurch, daß das Gebläsegehäuse unmittelbar in axialer Verlängerung unterhalb des Heizgerätes angeordnet ist, können die Luftströme weitgehend wirbelfrei in gerader Strömungsrichtung hochsteigen. Das erfindungsgemäß ausgebildete Gebläsegehäuse läßt gerade im Bereich der Brennkammer und des Verbrennungsraumes, wo hohe Temperaturen auftreten, größere Luftströme hochsteigen, die eine intensive Wärmeaufnahme und eine verstärkte Abkühlung in diesem Bereich bewirken. Besonders vorteilhaft erweist sich die erfindungsgemäße Heizluftführung in Verbindung mit einem Wellenmantel als Wärmetauscher-Heizflächen. In diesem Falle ergeben sich mehr oder weniger abgeschlossene Strömungskanäle mit verhältnismäßig großen Berührungsflächen für die Luftströme, die dadurch eine besonders intensive Erwärmung erfahren.

Vorteilhafte Weiterentwicklungen der Erfindung sind in Unteransprüchen beansprucht.

Die Erfindung wird nachfolgend anhand eines Ausführungsbeispieles, das in der Zeichnung schematisiert dargestellt ist, näher beschrieben.
Es zeigen:

Fig. 1 einen Vertikalschnitt nach der Linie I-I der Fig. 2,

Fig. 2 einen Vertikalschnitt nach der Linie II-II der Fig. 1,

Fig. 3 eine Draufsicht auf ein Gebläsegehäuse an der Stoßfläche zum Heizgerät nach der Linie III-III der Fig. 2,

Fig. 4 eine Seitenansicht auf das Gebläse in Richtung IV mit weggeschnittener Seitenwand und

Fig. 5 eine Seitenansicht auf die andere Gebläseseite V mit weggeschnittener Seitenwand.

Das dargestellte Raumheizgerät besteht im wesentlichen aus einem haubenförmigen Guß-Formstück, einer Gußhaube und einem Ansatzteil 2. Die Gußhaube bildet den Wärmetauscher 1 und weist eine im Querschnitt rechteckige Kasten- oder Blockform mit den Seiten- und Stirnwänden 5,6 auf. Die gegenüberliegenden Seitenwände 5 sind zu Wellenwänden 10 ausgebildet, die aus gleichgerichteten Wellen bestehen, die innere Wellenkanäle für die im Inneren strömenden Verbrennungsgase und äußere Wellenkanäle für die außen hochsteigende Heizluft bilden. Die nach außen gerichteten Wellenberge 16 liegen beispielsweise in einer Ebene. Die Seiten- und Stirnwände 5,6 sind an den oberen Enden durch ein Satteldach 15 haubenförmig geschlossen. An ihren unteren Enden ist ein Anschlußflansch 20 zur Verbindung mit dem Ansatzteil 2 ausgebildet. Die Gußhaube umfaßt eine Brennkammer 22, einen anschließenden Verbrennungsraum 23 für die hochsteigenden Verbrennungsgase sowie beim gezeigten Ausführungsbeispiel einen Verbrennungsgaskanal 24 für die abwärtsführenden Gase. Brennkammer 22 und Verbrennungsraum 23 sind mittels einer Trennwand 25 vom Verbrennungsgaskanal 24 abgetrennt. In einer ersten Umlenkung 27 werden die Verbrennungsgase einem ersten Fallschacht 28 zugeführt und durch eine zweite Trennwand 30 erfolgt eine weitere Abtrennung des nächsten Steigeschachtes 32, zu dem die Umlenkung 31 im Ansatzteil 2 führt. Eine dritte Trennwand 33 trennt diesen Steigeschacht 32 von einem zweiten Fallschacht 34 ab, wobei oben eine dritte Umlenkung 35 freigehalten wird. Der zweite Fallschacht 34 führt schließlich unterhalb der Gußhaube in eine Austrittskammer 37 mit einem Austrittsstutzen 38 zum Anschluß eines Abgaskamines (nicht gezeichnet). Da die Verbrennungsgase von Schacht zu Schacht abkühlen, werden auch die Querschnitte des Gasstromes und der Schächte kleiner. Die daraus sich ergebende Heizflächenverminderung kann zum Teil durch vergrößerte Wellen ausgeglichen werden. Bestehen die Trennwände 25 und 33 aus Einsetzelementen in Form von Wandplatten, die in gegenüberliegende Wellen eingesteckt und darin festgehalten werden, so wird die Trennwand 30 durch vertiefte Wellen gebildet, deren Spitzen zusammenstoßen und dadurch die Trennwand ergeben. Um die Ablenkung des Gasstromes in die inneren Wellenkanäle zu verstärken, können die auswechselbaren bzw. einsetzbaren Trennwände in die angrenzenden Schächte abstehende Abweiserfortsätze 40 aufweisen. Die Wellen im Bereich des Verbrennungsraumes 23 sind nicht so tief wie die nachfolgenden Wellen im Verbrennungsgaskanal 24. Bei den hohen Temperaturen im Verbrennungsraum 23 genügen nämlich bereits kleinere Heizflächen für eine optimale Wärmeabgabe. Im nachfolgenden Verbrennungsgaskanal 24 ist es hingegen vorteilhaft, die direkten Heizflächen durch größere Wellen zu vergrößern.

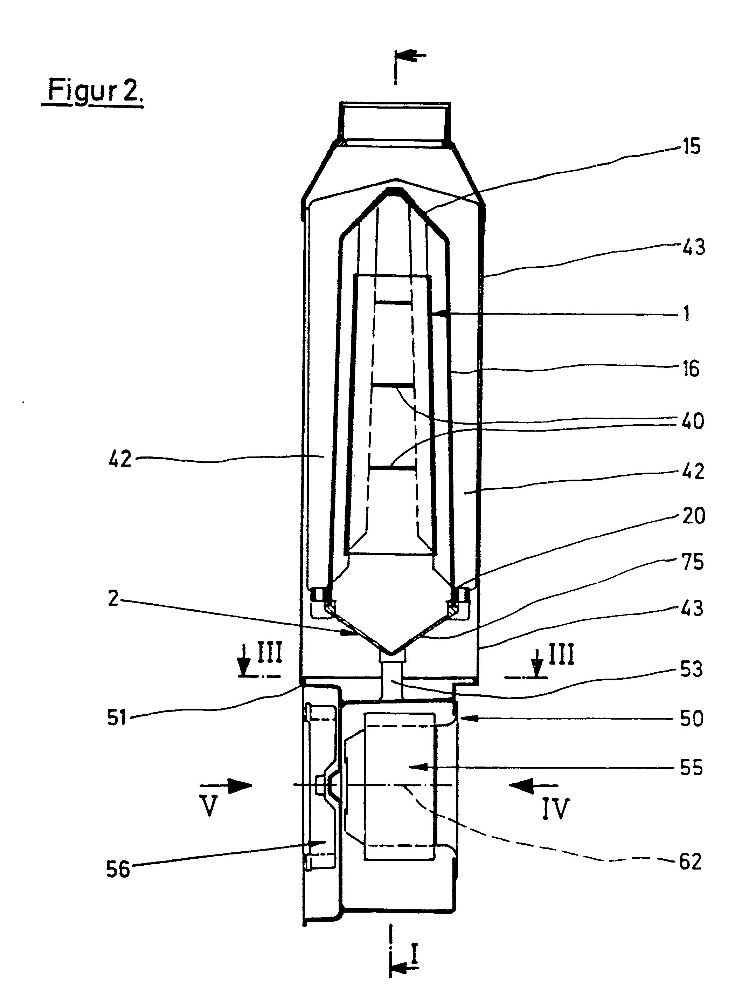

Die Wellenwände 10 erweisen sich auch für die außen hochsteigende Heizluft vorteilhaft. Durch an die Wellenberge 16 angeformte Leitlamellen 42 werden zusätzliche indirekte Heizflächen geschaffen und die äußeren Wellenkanäle noch vergrößert, so daß die Heizluftströme fast vollständig von Heizflächen eingeschlossen sind, insbesondere dann, wenn dieser Wärmetauscher 1 noch von einem Außenmantel 43 umgeben ist, der zweckmäßig die Leitlamellenspitzen annähernd oder direkt berührt (Fig. 2).

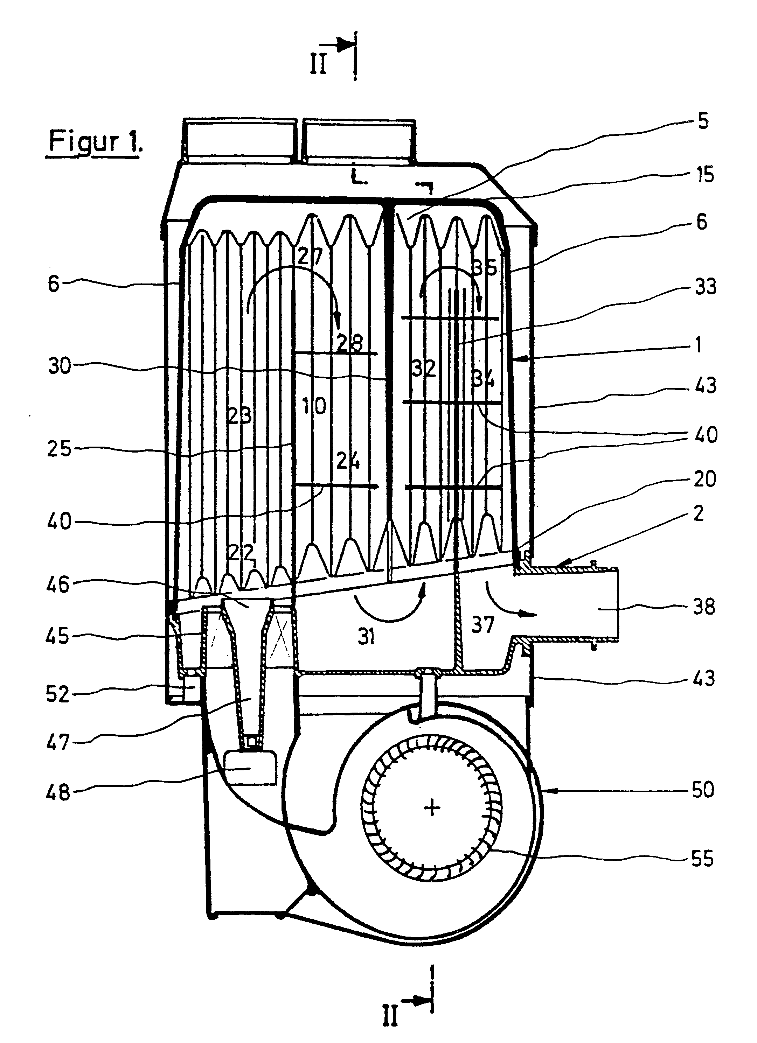

An die Gußhaube ist an ihren Anschlußflansch 20 das Ansatzteil 2 anmontiert, das die Gußhaube unten abschließt und vorteilhaft ebenfalls aus einem Gußstück gefertigt und mit Anschlußelementen für eine gasdichte Verbindung mit der Gußhaube ausgestattet ist. Eine eingeformte Luftführung 45 für die Verbrennungsluft umgibt einen Brenner 46, dessen Mischrohr 47 mit seinem Gas-Luft-Sammeltopf 48 ebenfalls mit dem Ansatzteil 2 mitgegossen werden kann. Die Gaszuleitung ist nicht sichtbar. Wie aus Fig. 1 zu sehen ist, steigt der Anschlußflansch 20 der Gußhaube von der Brennkammerseite zum Abgasaustritt hin an, weshalb der Austrittsstutzen 38 in vollem Umfang als ein Teil des Ansatzteiles 2 hergestellt werden kann.

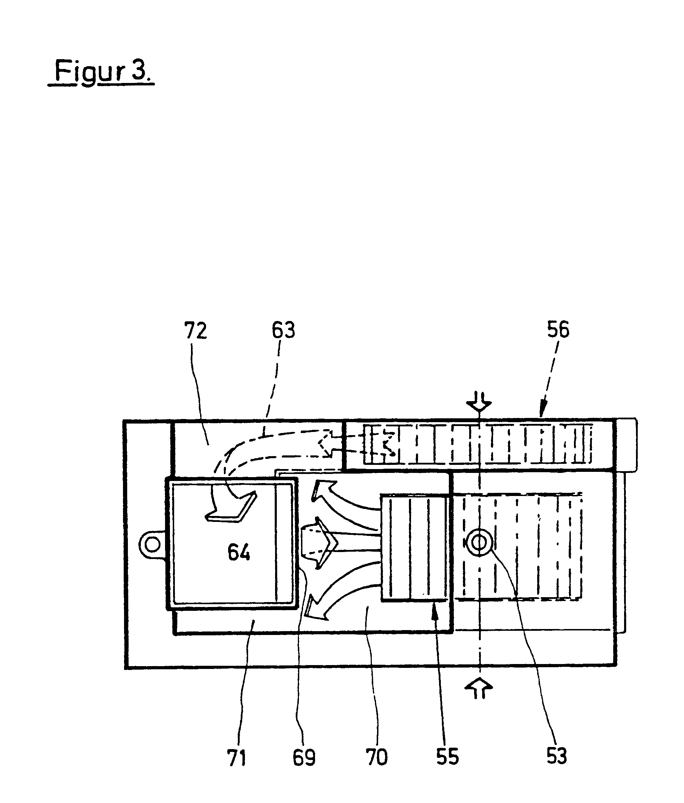

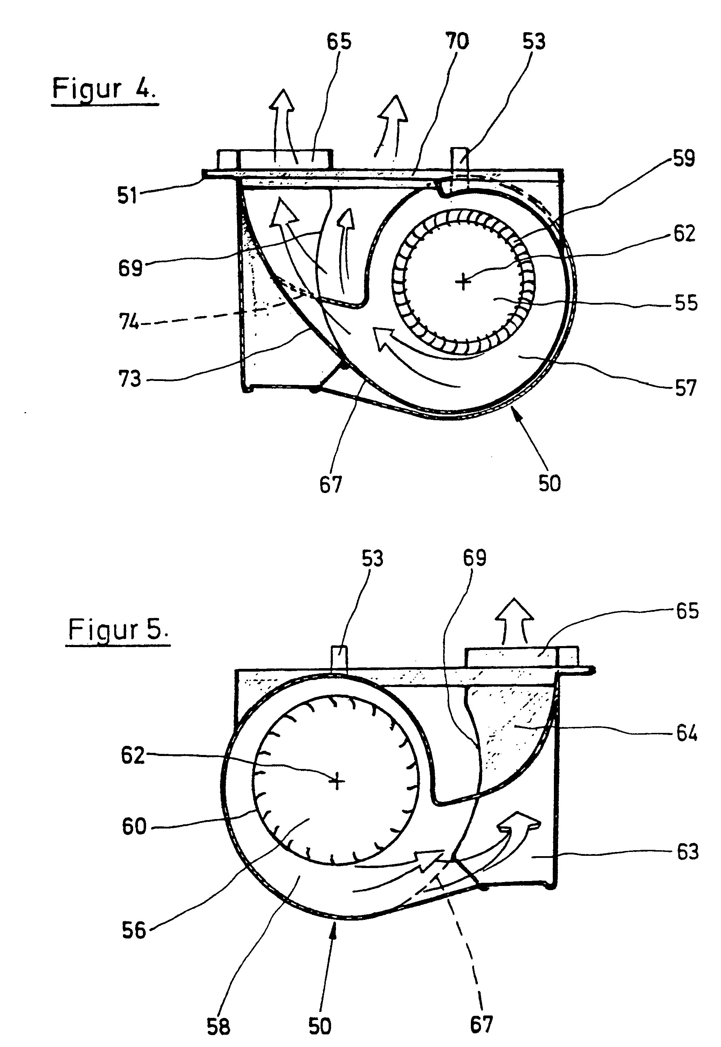

Auf der Unterseite des Ansatzteiles 2 ist ein Gebläsegehäuse 50 befestigt, das, ebenfalls ein Gußstück, mit seinem Flansch 51 angeschraubt ist, wozu neben einem Seitensockel 52 noch ein Zentralsockel 53 vorgesehen ist. Der Flansch 51 ist so gestaltet, daß darauf der Außenmantel 43 aufgesetzt und dadurch eine abgeschlossene Luftführung für die Heizluft gebildet wird. In dem Gebläsegehäuse 50 sind ein Heizluftgebläse 55 und ein Verbrennungsluftgebläse 56 untergebracht. Beide Gebläse 55,56 weisen in getrennten Spiralkammern 57,58 rotierende Radial-Schaufelräder 59,60 auf, die auf einer gemeinsamen Antriebswelle 62 gelagert sind. Um die von den beiden Gebläsen 55,56 erzeugten Luftströme zu trennen und entsprechend zu verteilen, weist das Gebläsegehäuse 50 Einbauten auf. So steht das verhältnismäßig schmale und seitlich eingeordnete Verbrennungsluftgebläse 56 (Fig. 3 und 5) mit einem als Diffusor dienenden seitlichen Unterzugkanal 63 mit einem Zentralkamin 64 in Verbindung, der mit seinem über die Flanschebene hochstehenden Rand 65 an die Luftführung 45 im Ansatzteil 2 anschließt (Fig. 1). Die Verbrennungsluft kann somit ungehindert der Brennkammer 22 zugeführt werden. Der aus dem zentral angeordneten Heizluft-Gebläse 55 austretende Heizluftstrom wird im Mittelabschnitt von einer an seiner Gebläsespirale 67 anschließenden Zentralkamin-Wand 69 nach oben und durch eine im Gebläsegehäuse 50 ausgebildete Öffnung 70 in den Heizraum hochgeblasen. Diese Öffnung 70 erstreckt sich auch beiderseits des Zentralkamines 64, damit die Heizluft auch durch die Seitenkanäle 71 und 72 hochsteigen kann. Dabei sind die zugehörigen Kanal-Leitwände 73 und 74 (Fig. 4) weitgehend als Fortsetzungen der Gebläsespirale 67 ausgebildet. Die Heizluft wird also in einem großen Bereich hochgeblasen und kann in weiter Verteilung in den Heizraum eintreten. Ein verstärkter Luftstrom wird durch die Seitenkanäle 71,72 an der Brennkammer 22 und dem Verbrennungsraum 23 vorbei hochgeführt, wodurch an diesen heißesten Wärmetauscherflächen mehr Wärme aufgenommen und eine stärkere Abkühlung erreicht wird. Dazu verlaufen die Seitenkanal-Leitwände 73,74 so, daß sie etwa am Außenrand der Luftführung 45 enden und auf diese Weise vor allem den Brennkammerbereich einschließen. Die Luftverteilung auf den gesamten Heizraum wird durch eine dreiecksförmige Ausbildung einer Bodenwanne 75 am Ansatzteil 2 begünstigt. Die Zentralkamin-Wand 69 ist zu diesem Zweck mit ihrem oberen Ende zum Geräteinnern gerichtet.

Auch in Verbindung mit anderen Wärmetauscher-Formen mit glatten Wärmedurchgangsflächen kann die Luftführung in einem Gebläsegehäuse mit Vorteil Anwendung finden, wie auch ein den Heizraum abschließender Außenmantel nicht unbedingt notwendig ist. Schließlich ermöglichen die zwangsgeführten Luftströme auch eine Aufstellung des Heizgerätes mit liegendem oder geneigtem Wärmetauscher.

## Ansprüche

1. Raumheizgerät für Kleinräume, insbesondere für fahrbare Räume, wie Wohnwagen, Fahrzeug- und Schiffskabinen, mit einem im Querschnitt länglichen Wärmetauscher mit einem an eine Brennkammer anschließenden Verbrennungsgaskanal sowie mit einem Gebläsegehäuse für ein Verbrennungsluft-Gebläse und ein Heizluft-Gebläse, dadurch gekennzeichnet, daß das Gebläsegehäuse (50) unterhalb des Wärmetauschers (1) angebracht ist, die darin ausgebildeten Heizluft- und Verbrennungsluft-Gebläse (55, 56) nebeneinanderliegende und einer zur am Wärmetauscher entlanggeführten Heizluftströmung querliegenden Antriebswelle (62) zugeordnete Spiralkammern (57, 58) und Radial-Schaufelräder (59, 60) aufweisen, die Spiralkammer (58) des Verbrennungsluftgebläses (56) über einen Unterzugkanal (63) in einen im Gebläsegehäuse (50) ausgebildeten Zentralkamin (64), der an eine Luftführung (45) zur Brennkammer (22) angeschlossen ist, einmündet und daß die Spiralkammer (57) des Heizluftgebläses (55) sich in einer Zentralkamin-Wand (69) sowie in beiderseits des Zentralkamins (64) vorgesehenen Leitwänden (73, 74) fortsetzt zum Umlenken des Heizluftstromes zum Wärmetauscher (1).

2. Heizgerät nach Anspruch 1, dadurch gekennzeichnet, daß die Leitwände (73, 74) der Seitenkanäle (71, 72) an dem Außenrand der Luftführung (45) anschließen.

3. Heizgerät nach Anspruch 1 oder 2, dadurch gekennzeichnet, daß die Zentralkamin-Wand (69) mit ihrem Anschlußende zum Geräteinneren gerichtet ist.

4. Heizgerät nach einem der Ansprüche 1 bis 3, dadurch gekennzeichnet, daß ein zwischen Wärmetauscher (1) und Gebläsegehäuse (50) vorgesehener Ansatzteil (2) eine im Querschnitt dreiecksförmige Bodenwanne (75) aufweist.

**Revendications**

1. Appareil de chauffage spatial pour petits locaux, en particulier pour des locaux mobiles, tels que des caravanes, des cabines de véhicule et de bateau, avec un échangeur de chaleur ayant une section transversale allongée avec un canal à air comburant faisant suite à une chambre d'allumage, ainsi qu'avec un carter de souffleries pour une soufflerie à air comburant et une soufflerie à air de chauffage, caractérisé par le fait que le carter (50) de souffleries est installé en-dessous de l'échangeur (1) de chaleur, que les souffleries (55, 56) à air de chauffage et à air comburant qui y sont installées présentent des chambres spiroïdales (57, 58) qui sont placées côte à côte et reçoivent un arbre (62) d'entraînement s'étendant dans le sens transversal à la circulation de l'air de chauffage conduit le long de l'échangeur de chaleur, et des roues (59, 60) à palettes radiales, que la chambre spiroïdale (58) de la soufflerie (56) pour l'air comburant débouche, par l'intermédiaire d'un canal (63) de soufflage par le bas, dans une cheminée (64) centrale réalisée dans le carter (50) de souffleries et raccordée à un guidage (45) d'air pour la chambre (22) d'allumage, et que la chambre spiroïdale (57) de la soufflerie (55) pour l'air de chauffage se poursuit dans une paroi (69) de la cheminée centrale, ainsi que dans des parois (73, 74) de guidage prévues de part et d'autre de la cheminée (64) centrale pour renvoyer le flux d'air de chauffage vers l'échangeur (1) de chaleur.

2. Appareil de chauffage suivant la revendication 1, caractérisé par le fait que les parois (73, 74) de guidage des canaux (71, 72) latéraux sont placés à la suite du bord extérieur du guidage (45) de l'air.

3. Appareil de chauffage suivant la revendication 1 ou 2, caractérisé par le fait que la paroi (69) de la cheminée centrale est dirigée dans son extrémité de raccordement vers l'intérieur de l'appareil.

4. Appareil de chauffage suivant l'une des revendications 1 à 3, caractérisé par le fait qu'une partie (2) de fonction, prévue entre échangeur (1) de chaleur et carter (50) de souffleries, présente un fond (75) en cuvette ayant une section transversale de forme triangulaire.

**Claims**

1. Room heater for small rooms, in particular mobile enclosures such as caravane, vehicle and ship cabins, comprising a cross-sectionally elongate heat exchanger with a combustion-gas channel connecting to a burner chamber, and a blower housing for a combustion-air blower and a heating-air blower, **characterised in that** the blower housing (50) is accomoded underneath the heat exchanger (1), in that therein arranged heating-air and combustion-air blowers (55, 56) comprise spiral chambers (57, 58), which are placed alongside one another and associated to the driveshaft (62) which is placed transversely to the heating airstream ducted along the heat exchanger, and radial impellers (59, 60), in that the spiral chamber (58) of the combustion-air blower (56) runs via a bearing channel (63) into a central flue (64) which is arranged in the blower housing (50), which is connected to an air duct (45) to burner chamber (22), and in that the spiral chamber (57) of the heating-air blower (55) extends into a central-flue wall (69) as well as into duct walls (73, 74) which are provided on both sides of the central flue (64) for the purpose of diverting the heating airstream towards the heat exchanger (1).

2. Heater according to claim 1, **characterised in that** the duct walls (73, 74) of the lateral channels (71, 72) connect to the outside edge of the air duct (45).

3. Heater according to claim 1 or 2, **characterised in that** the connecting end of the central flue wall (69) is oriented towards the inside of the device.

4. Heater according to one of claims 1 to 3, **characterised in that** an assembly member (2), which is provided between a heat exchanger (1) and a blower housing (50), comprises a cross-sectionally triangular base tub (75).

Figur 1.

## Figur 2.

## Figur 3.

Figur 4.

Figur 5.